# EUROPÄISCHE PATENTSCHRIFT

(11) **EP 1 939 608 B1**
(45) Veröffentlichungstag und Bekanntmachung des Hinweises auf die Patenterteilung: **21.12.2016**
(21) Anmeldenummer: 07021762.5
(22) Anmeldetag: 09.11.2007
(51) Int. Cl.: G01N 21/90, B07C 5/12, G01N 21/15

(54) **Vorrichtung und Verfahren zum Inspizieren von Behältnisböden**
Method and device for inspecting container bottoms
Dispositif et procédé destinés à l'inspection de fonds de récipients

(30) Priorität: 29.12.2006 DE 102006062575
(43) Veröffentlichungstag der Anmeldung: 02.07.2008
(73) Patentinhaber: Krones AG, 93073 Neutraubling (DE)
(72) Erfinder: Niedermeier, Anton, 93326 Offenstetten (DE)
(74) Vertreter: Bittner, Bernhard

(56) Entgegenhaltungen:
- EP-A- 0 585 821
- EP-A- 0 620 430
- EP-A- 0 701 117
- JP-A- 2003 322 623
- US-A1- 2005 248 766

## Beschreibung

Die vorliegende Erfindung bezieht sich auf eine Vorrichtung und ein Verfahren zum Inspizieren von Behältnisböden. Derartige Vorrichtungen sind aus dem Stand der Technik bekannt. In US 2005/00248766 A1 werden Kameras beschrieben, die unterhalb von Greifelementen und unter einem schrägen Winkel unterhalb der Behältnisse angeordnet sind

Grundsätzlich besteht eine Notwendigkeit, gefüllte Behältnisse auf Kontaminationen im Produkt wie beispielsweise Glasscherben aber auch sonstige, unlösliche Verschmutzungen organischer oder anorganischer Art zu prüfen. Zu diesem Zweck ist eine Vielzahl von Vorrichtungen aus dem Stand der Technik bekannt. Der überwiegende Teil optischer Prüfeinrichtungen beruht darauf, dass die Verunreinigung wie beispielsweise ein Glasscherben in unterschiedliche Positionen gebracht wird, mehrere Aufnahmen des Behältnisses zueinander verglichen werden und somit der Glasscherben erkannt wird. Derartige Vorrichtungen sind unter dem Sammelbegriff Full Bottle Inspection (FBI) bekannt.

Um eine Positionsänderung des Fremdkörpers zu erzielen, werden die Behältnisse bewegt, zum Teil geschwenkt, zum Teil um die Flaschenlängsachse rotiert. Bei einer Bewegung, die zeitnah zu der Erkennung durchgeführt wird, spritzt jedoch Wasser, Bandschmiermittel und gelegentlich das Produkt selbst (beispielsweise bei brechenden oder undichten Behältern) an das Schutzglas des optischen Sensors, bei dem es sich meist um eine Kamera handelt. In der Folge verschmutzt dieses Schutzglas.

Diese permanente Verschmutzung des Schutzglases ist ein grundlegendes Problem bei der oben beschriebenen Beobachtung von Behältnissen. Die Sicht auf das Behältnis wird dadurch mit der Zeit beeinträchtigt und die Erkennungsleistung nimmt entsprechend ab. Daher ist es im Stand der Technik bekannt, das Schutzglas regelmäßig zu reinigen. Dadurch werden jedoch die Standzeiten im Falle einer manuellen Reinigung erhöht, und der Wirkungsgrad der Maschine verschlechtert. Im Falle einer automatischen Reinigung wird oft kein zufriedenstellender Reinigungseffekt erzielt. Bei bestimmten Vorrichtungen inspiziert die optische Kontrolle den Behälterboden durch das Kameraschutzglas, welches direkt unterhalb des Behälterbodens angebracht ist. Jegliche Feuchtigkeit, die herabfällt, fällt dabei direkt auf das Schutzglas, wodurch sich mit der Zeit die Sicht verschlechtert und irrtümlich Fehler detektiert werden. In der Praxis bedeutet dies, dass mindestens 1x pro 8 Stunden Betriebszeit die Schutzgläser gereinigt werden müssen, wobei die Reinigungsintervalle zu erhöhen sind, wenn Flaschen in der Maschine brechen.

Weiterhin hat sich auch gezeigt, dass benachbarte Schutzgläser verschmutzen, wenn zum Beispiel ein Behältnis im Inspektionskarussell oder in dessen Nähe platzt. Ein weiterer Verschmutzungsfaktor ergibt sich daraus, dass die im Stand der Technik bekannten Inspektionskarusselle im Bereich der Behältnisübergabe unter die Beschleunigungskarusselle tauchen, wobei diese Beschleunigungskarusselle dazu dienen, um die Behältnisse beispielsweise durch Drehbewegungen zu beschleunigen. In diesem Falle können Schmiermittel und Schmutz aus den Antriebseinheiten auf die Schutzgläser fallen. Da weiterhin Abrieb auftritt, kann auch hiervon Verschmutzung auf das Schutzglas auftreffen.

Der vorliegenden Erfindung liegt daher die Aufgabe zugrunde, eine Vorrichtung zur Verfügung zu stellen, bei der der Reinigungsaufwand für die Schutzgläser erniedrigt wird. Insbesondere soll eine Vorrichtung zur Verfügung gestellt werden, bei der durch konstruktive Maßnahmen der Verschmutzungsgrad der Schutzgläser pro Zeiteinheit vermindert wird.

Diese Aufgabe wird erfindungsgemäß durch den Gegenstand von Anspruch 1 gelöst. Vorteilhafte Ausführungsformen und Weiterbildungen sind Gegenstand der Unteransprüche.

Die erfindungsgemäße Vorrichtung zum Inspizieren von Behältnisböden weist eine Beobachtungseinrichtung auf, welche die Behältnisböden beobachtet. Daneben ist eine Vielzahl von Sichtfenstern vorgesehen, welche unterhalb der Behältnisböden angeordnet sind und welche Sichtabschnitte aufweisen, durch welche hindurch die Beobachtungseinrichtung die Behältnisböden beobachtet. Dabei sind die Sichtfenster in einer Trägerplatte angeordnet.

Erfindungsgemäß sind Halteeinrichtungen vorgesehen, die die Behältnisse oberhalb der Trägerplatte beabstandet zu dieser transportieren wobei die Sichtfenster gegenüber einer Projektion der Behältnisse in einer senkrecht zu der Trägerplatte stehenden Richtung wenigstens teilweise versetzt angeordnet sind.

Die Projektion der Behältnisse ergibt diejenige Fläche, die in einer senkrechten Richtung gegenüber der Trägerplatte genau unterhalb der Behältnisse liegt.

Durch das versetzte Anordnen der Sichtabschnitte bzw. bevorzugt der ganzen Sichtfenster kann erreicht werden, dass von den Behältnissen herabfallende Verschmutzungen, die im Wesentlichen in senkrechter Richtung herabfallen, nicht auf die Sichtabschnitte gelangen.

Vorzugsweise sind die Sichtabschnitte bzw. besonders bevorzugt die gesamten Sichtfenster vollständig außerhalb der Projektion der Behältnisse angeordnet.

Bevorzugt transportieren die Halteeinrichtungen die Gefäße entlang einer vorgegebenen Linie beliebiger Geometrie und die einzelnen Sichtabschnitte sind gegenüber dieser Linie versetzt angeordnet. So könnten die Gefäße auch beispielsweise entlang einer geraden Linie transportiert werden und die Sichtfenster parallel zu dieser geraden Linie auf einer weiteren geraden Linie angeordnet sein. Unter einer versetzten Anordnung der Sichtabschnitte gegenüber der Linie wird verstanden, dass bevorzugt kein Abschnitt des Sichtfensters unterhalb der Linie angeordnet ist. In jedem Falle ist bei dieser Ausführungsform das Zentrum des Sichtfensters bzw. das Zentrum der Sichtabschnitte jeweils gegenüber der Linie, auf der die Gefäße transportiert werden, verschoben.

Es wäre jedoch auch möglich, dass Behältnisse entlang einer Linie transportiert werden und auch die Sichtfenster entlang dieser Linie angeordnet sind wobei sie jedoch versetzt zu den jeweiligen Projektionen angeordnet sind. In diesem Falle würde bevorzugt auf jede Projektion der Behältnisse ein Sichtabschnitt folgen und diese wären abwechselnd zueinander angeordnet.

Bevorzugt sind Halteeinrichtungen vorgesehen, die die Gefäße wenigstens abschnittsweise entlang einer ersten Kreislinie mit einem vorgegebenen Radius transportieren und die Sichtabschnitte sind in einer radialen Richtung gegenüber dieser Kreislinie versetzt angeordnet, vorzugsweise auf der radial inneren Seite der Kreislinie.

Mit anderen Worten wird das Sichtfenster bzw. das Schutzglas aus dem bevorzugten Verschmutzungsbereich der zugeordneten Behälterhalterung herausgenommen und damit erreicht, dass die von den Behältern herabfallenden Schmutzpartikel nicht auf das Sichtfenster fallen, sondern auf hierzu benachbarte Bereiche der Trägerplatte. Auf diesen benachbarten und insbesondere nicht transparenten benachbarten Bereichen der Trägerplatte wirken sich die Verschmutzungen nicht in dem Maße störend aus, wie auf den Sichtfenstern, bei denen direkt die Beobachtung der Behältnisse gestört wird. Besonders bevorzugt ist die Beobachtungseinrichtung, bei der es sich insbesondere um eine Kamera handelt, unterhalb der Sichtfenster angeordnet.

Bei einer weiteren bevorzugten Ausführungsform weist die Trägerplatte einen kreisförmigen Querschnitt auf und die Sichtfenster sind entlang einer zweiten Kreislinie angeordnet, wobei diese zweite Kreislinie einen Radius aufweist, der von dem Radius der ersten Kreislinie abweicht und vorzugsweise geringer als dieser ist. Mit anderen Worten sind die Sichtfenster in jeweils gleichen Abstand zu der ersten Kreislinie angeordnet und damit ist der Versatz einheitlich.

Besonders bevorzugt ist der Versatz mindestens so groß, dass kein Bereich des Sichtfensters mehr unterhalb der Behältnisse im Betrieb zu liegen kommt.

Vorteilhafterweise sind die Halteeinrichtungen im Wesentlichen ortsfest mit der Trägerplatte verbunden. Dies bedeutet, dass sich die Halteeinrichtungen mit der gleichen Geschwindigkeit wie die Trägerplatte bewegen und damit die Behältnisse gegenüber den Beobachtungseinrichtungen nicht bewegt werden.

Besonders bevorzugt ist wenigstens einer Halteeinrichtung genau eine Beobachtungseinrichtung mit genau einem Sichtabschnitt zugeordnet. Dies bedeutet, dass die Anzahl der Sichtfenster und Sichtabschnitte der Anzahl der Beobachtungseinrichtungen bzw. Kameras entspricht und diese Kameras stationär bezüglich der Sichtfenster angeordnet sind. Auf diese Weise kann eine Kamera mehrere zeitlich versetzte Aufnahmen des gleichen Behältnisses aufnehmen und auf diese Weise das Vorhandensein von Fremdkörpern in dem Behältnis feststellen.

Bevorzugt ist oberhalb der Trägerplatte wenigstens eine Spritzschutzeinrichtung vorgesehen, welche die Sichtfenster wenigstens teilweise und bevorzugt vollständig umgibt. Bei dieser Spritzschutzeinrichtung, die im Folgenden auch als Spritzwasserfalle bezeichnet wird, können Kontaminationen aus diversen Richtungen oder Nachbarstationen und Spritzwasser aus dem stromaufwärts angeordneten Beschleunigungskarussell abgehalten werden. Besonders bevorzugt weist die Spritzschutzeinrichtung wenigstens einen dem Behältnisboden zugewandte Öffnung auf. Genauer gesagt wird der Behältnisboden durch diese Öffnung und durch das Sichtfenster von der Beobachtungseinrichtung beobachtet, d.h. der optische Strahlengang verläuft von der Kamera gegebenenfalls über einen Umlenkspiegel durch das Sichtfenster und durch die Öffnung der Spritzschutzeinrichtung in Richtung des Behältnisbodens.

Es ist jedoch auch möglich, dass die Spritzschutzeinrichtung keine Öffnung, sondern einen transparenten Bereich aufweist, durch welchen hindurch der Behältnisboden beobachtet werden kann.

In einer weiteren bevorzugten Ausführungsform weist die Spritzschutzeinrichtung eine Ablassöffnung für Flüssigkeit auf. Auf diese Weise kann sich ansammelnde Spritzflüssigkeit aus der Spritzschutzeinrichtung herausgeleitet werden. Durch die Spritzschutzeinrichtung wird zusätzlich die Verschmutzung durch brechende Behälter verringert. Falls im Stand der Technik ein Behältnis brach, wurden das darunter befindliche und auch die benachbarten Schutzgläser verschmutzt. Mit der Spritzschutzeinrichtung können die benachbarten Sichtfenster nicht verschmutzt werden und nur ein vernachlässigbarer Teil der im Stand der Technik üblichen Menge trifft auf dem zugeordneten Sichtfenster auf. Insbesondere für diesen Anteil ist an der Spritzschutzeinrichtung an deren Fuß optional eine kleine Ablassöffnung vorgesehen.

Die Erkennung der Behältnisböden wird durch die erfindungsgemäß leicht schräg gestellte Sicht nicht wesentlich beeinträchtigt, die grundsätzlichen Vorteile, den vollständigen Boden immer zu beobachten, werden jedoch beibehalten und die Sichtfenster sind, wie erwähnt, besonders unempfindlich gegen feuchte Behälter und erlauben eine vollständige Erkennungen auch bei Mehrwegbehältnissen.

Bei einer weiteren bevorzugten Ausführungsform ist der Sichtabschnitt radial innerhalb der Behältnisböden bei der oben erwähnten Projektion angeordnet. Auf diese Weise kann die Gesamtgröße der Vorrichtung gering gehalten werden, insbesondere dann, wenn auch die Beobachtungsvorrichtungen innerhalb der Behältnisböden angeordnet sind. Mit anderen Worten sind die Sichtabschnitte gegenüber der Kreislinie, auf der die Gefäße geführt werden, innerhalb angeordnet. Günstigerweise werden Fremdkörper durch die radial nach außen von der Kreislinie weggerichtete Zentrifugalkraft in die Gegenrichtung bewegt. Vorteilhaft ist eine Vielzahl von Beobachtungseinrichtungen im Wesentlichen äquidistant zueinander angeordnet.

Bei einer weiteren bevorzugten Ausführungsform ist eine ortsfest angeordnete Spritzschutzwand vorgesehen, die wenigstens abschnittsweise radial innerhalb der ersten Kreislinie verläuft. Bevorzugt verläuft der entsprechende Abschnitt auch außerhalb der zweiten Kreislinie Dabei kann insbesondere die auch als Prallblech bezeichnete Spritzschutzwand im Bereich der Übergabe der Flaschen an die Vorrichtung soweit verlängert werden, dass die Spritzschutzeinrichtung während einer Bodenabblasung weiterhin verschlossen bleibt. Damit werden auch Verunreinigungen durch die Bodenabblasung selbst, welche bisher ebenfalls eine Quelle von Verschmutzungen war, vermieden.

Die vorliegende Erfindung ist weiterhin auf eine Anlage zum Inspizieren von Gefäßen mit einer Vorrichtung zum Inspizieren von Gefäßen der oben beschriebenen Art gerichtet, wobei diese Anlage stromaufwärts bezüglich der Vorrichtung ein Beschleunigungskarussell aufweist. Dieses Beschleunigungskarussell weist eine Vielzahl von Halteelementen auf, die die Behältnisse in einer vorgegebenen Weise gegenüber dem Beschleunigungskarussell bewegen. Vorzugsweise werden die Behältnisse um ihre Längsachse gedreht, es wäre jedoch auch möglich, eine Schwenkbewegung der Behältnisse durchzuführen, um auf diese Weise Fremdkörper in dem Behältnis aufzuwirbeln. Besonders bevorzugt werden die Behältnisse direkt von dem Beschleunigungskarussell an die erfindungsgemäße Vorrichtung übergeben.

In einer weiteren bevorzugten Ausführungsform weist das Beschleunigungskarussell einen Behältnisträger auf und dieser Behältnisträger ist oberhalb der Trägerplatte angeordnet. Mit anderen Worten ist die Ebene dieses Behältnisträgers oberhalb der Ebene der Trägerplatte vorgesehen.

Die vorliegende Erfindung kann auch an bereits bestehenden Inspektionsvorrichtungen nachgerüstet werden. Hierzu sind nur geringe Änderungen nötig. So ist es beispielsweise relativ wenig aufwendig möglich, die geometrische Form des Prallblechs zu ändern oder die Umlenkspiegel für die Beobachtungsvorrichtung anders zu positionieren. Auch der Deckelbereich des Inspektionskarussells selbst ist relativ leicht zu ändern und auch der Stecker der inneren Bodenlampe, die für die Illumination der Behältnisse verwendet wird, kann relativ einfach geändert werden.

Auf diese Weise kann, wie oben erwähnt, eine höhere Verfügbarkeit der Maschine erreicht werden, die Reinigungsintervalle liegen deutlich weiter auseinander und die Wahrscheinlichkeit irrtümlicher Fehlererkennungen nimmt signifikant ab.

Die vorliegende Erfindung ist weiterhin auf ein Verfahren zum Inspizieren von Behältnisböden gerichtet, wobei die Behältnisse mit einer Beobachtungseinrichtung von unterhalb durch Sichtabschnitte hindurch beobachtet werden und die Sichtabschnitte in Sichtfenstern angeordnet sind. Dabei sind die Sichtfenster in einer Trägerplatte angeordnet Erfindungsgemäß werden die Behältnisse wenigstens abschnittsweise entlang einer ersten vorgegebenen Linie oberhalb der Trägerplatte und beabstandet zu dieser transportiert, und die Sichtabschnitte sind gegenüber einer Projektion der Behältnisse in einer senkrecht zu der Trägerplatte stehenden Richtung versetzt angeordnet.

Weitere Vorteile und Ausführungsformen ergeben sich aus den beigefügten Zeichnungen:
Darin zeigen:
   - Fig. 1: eine schematische teilweise Darstellung einer Beobachtungsvorrichtung nach dem Stand der Technik;
   - Fig. 2: eine schematische Darstellung einer Inspektionsanlage nach dem Stand der Technik;
   - Fig. 3: eine schematische teilweise Darstellung einer Beobachtungsvorrichtung nach der Erfindung;
   - Fig. 4: eine Draufsicht auf eine erfindungsgemäße Inspektionsanlage.

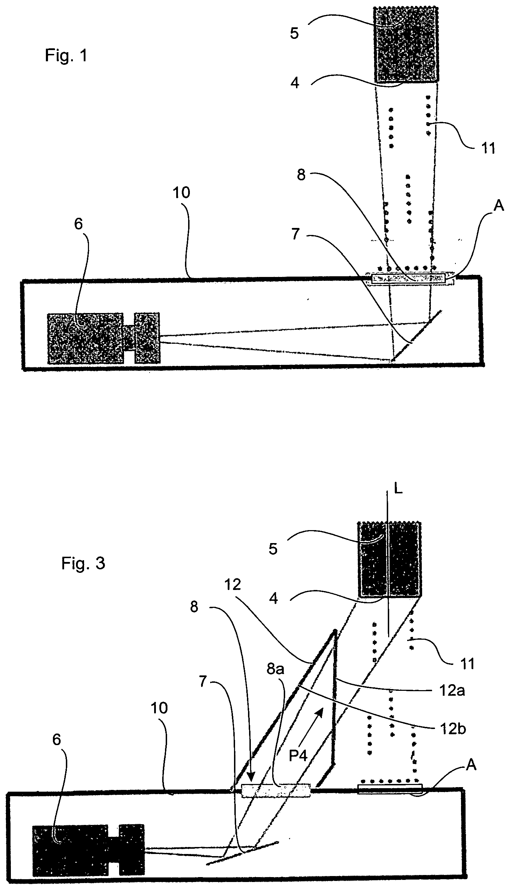

Fig.1 zeigt eine schematische teilweise Darstellung einer Vorrichtung 1 zum Inspizieren von Behältnisböden nach dem Stand der Technik. Dabei bezieht sich das Bezugszeichen 5 auf ein bereits verschlossenes und gefülltes Behältnis und das Bezugszeichen 4 auf dessen Boden. Dieser Boden 4 wird mit der Inspektionsvorrichtung beobachtet. Durch diesen Zweck ist eine Beobachtungseinrichtung 6, beispielsweise in Form einer Kamera vorgesehen, die über einen Umlenkspiegel 7 den Behältnisboden 4 beobachtet. Dabei erfolgt die Beobachtung über ein Sichtfenster bzw. ein Schutzglas 8, welches in einer Trägerplatte 10 angeordnet ist.

Während des Betriebs fällt jedoch Flüssigkeit 11 wie beispielsweise Kondenswasser von den Behältnisböden 4 herab und kann, wie durch das Bezugszeichen 11 angedeutet, das Sichtfenster 8 verschmutzen. Dabei ist die Trägerplatte 10 Teil des Inspektionskarussells, welches unter ein Beschleunigungskarussell, welches die Behältnisse 5 übergibt, taucht. Damit können auch Schmiermittel aus den Antriebseinheiten des Beschleunigungskarussells auf die Sichtfenster fallen. Genauer gesagt taucht im Stand der Technik das Sichtfenster direkt unter die Antriebseinheit des Beschleunigungskarussells. Dadurch wird beispielsweise auch verursacht, dass neben den Flüssigkeiten Abriebspartikel auf den Sichtfenstern auftreffen. Die Folge ist eine starke Verschmutzung der Sichtfenster und damit das Erfordernis, die Sichtfenster 8 häufig zu reinigen.

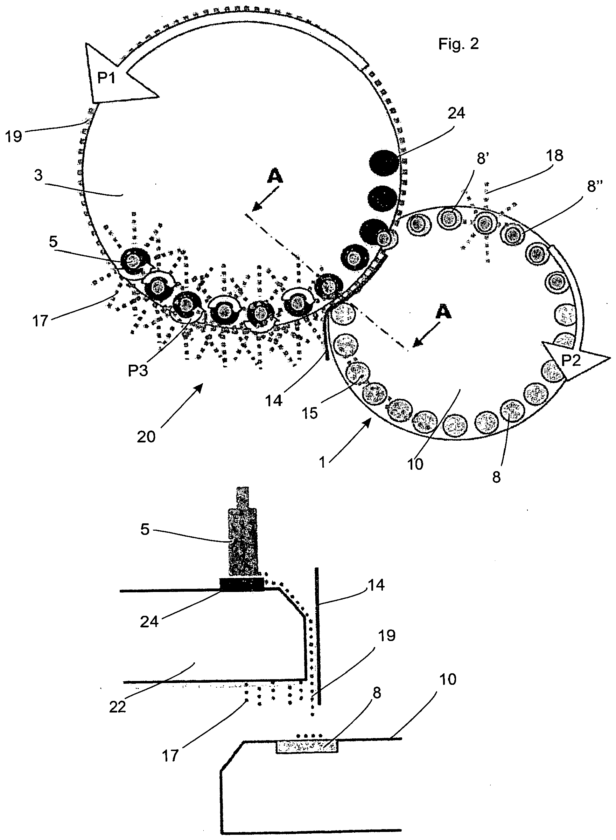

Fig. 2 zeigt eine Draufsicht auf eine Inspektionsvorrichtung nach dem Stand der Technik und das untere Teilbild eine Seitendarstellung. Aus der oberen Darstellung erkennt man, dass die Inspektionsvorrichtung abschnittsweise unter das Beschleunigungskarussell 3 eintritt. In diesem Beschleunigungskarussell 3 werden die Behältnisse, wie eingangs erwähnt und wie durch die Pfeile P3 angedeutet, um ihre Längsachse gedreht, um auf diese Weise auch die Flüssigkeit in den Behältnissen in Bewegung zu versetzen. Bei dieser Drehung wird jedoch auch Kondenswasser von den Behältnissen weggeschleudert, was für weitere Verschmutzungen der Sichtfenster sorgt. Das Beschleunigungskarussell dreht sich hier entgegen dem Uhrzeigersinn (Pfeil P1) und die Inspektionsvorrichtung 3 im Uhrzeigersinn (Pfeil P2)

Das Bezugszeichen 19 bezieht sich auf Verschmutzungen, die direkt an dem Beschleunigungskarussell 3 entstehen. Das Bezugszeichen 24 bezieht sich auf Drehteller, mittels denen die Behältnisse um ihre Längsrichtung gedreht werden. Durch diese Drehung können ebenfalls Verschmutzungen 17 weggeschleudert werden.

Im Übergabebereich zwischen dem Beschleunigungskarussell 3 und der Inspektionsvorrichtung 1 werden die Behältnisse 4 von (nicht gezeigten) Halteeinrichtungen übernommen und entlang des Pfeils P2 bewegt. Dabei werden im Stand der Technik die Behältnisse vertikal über den Sichtfenstern 8 gehalten.

Ein Prallblech 14 bewirkt zwar, dass ein Teil der Verschmutzungen 17 nicht auf Inspektionsvorrichtungen 1 gelangen kann, gleichwohl wird nicht verhindert, dass von den Behältnissen abtropfende Flüssigkeit direkt auf die darunter liegenden Sichtfenster fällt, wie durch das Bezugszeichen 15 angedeutet ist. Das Bezugszeichen 18 bezieht sich auf Verschmutzungen, die in Folge eines Bruches des entsprechenden Behältnisses entstehen können und auf diese Weise jedenfalls die benachbarten Sichtfenster 8' und 8" verschmutzen können. Das untere Teilbild in Fig. 2 zeigt eine Draufsicht auf die Übergabeposition entlang der Linie A-A in dem oberen Teilbild. Man erkennt, dass das Beschleunigungskarussell teilweise über dem Sichtfenster 8 angeordnet ist und auf diese Weise die Verschmutzungen 19, 18, 17 auf das Sichtfenster gelangen können.

Fig. 3 zeigt eine erfindungsgemäße Inspektionsvorrichtung, genauer gesagt, eine Anlage 20 mit einer Inspektionsvorrichtung. Man erkennt, dass hier das Sichtfenster 8 bzw. der Sichtabschnitt 8a seitlich gegenüber der Längsrichtung L der Behältnisse versetzt ist. Mit anderen Worten ist das Behältnis senkrecht über einen Abschnitt A angeordnet und dieser Abschnitt A ist seitlich gegenüber dem Sichtfenster versetzt. Dieser Abschnitt A stellt gleichzeitig die Projektion der Behältnisse in der gegenüber der Trägerplatte 10 senkrechten Richtung L dar. Die Vielzahl dieser Abschnitte A ist bei der in Figur A gezeigten Ausführungsform in wesentlichen konzentrisch (entlang der Linie K2) um den Mittelpunkt angeordnet, sodass sich insgesamt die Struktur eines Streifenrings in der Draufsicht auf die Trägerplatte ergibt. Die Behältnisse werden von (nicht gezeigten) Halteeinrichtungen geführt. Diese Halteeinrichtungen können die Behältnisse dabei an unterschiedlichen Bereichen, etwa einem Halsbereich oder einem mittleren Bereich, halten. Die Behältnisse werden von den Halteeinrichtungen entlang der Kreislinie K1 transportiert, genauer gesagt bewegt sich die Längsrichtung der Behältnisse im Wesentlichen entlang dieser Kreislinie K1.

Auf diese Weise wird erreicht, dass Verschmutzungen nicht direkt auf das Sichtfenster 8 fallen, sondern auf den besagten Bereich A. Auch in diesem Falle beobachtet die Beobachtungseinrichtung 6 das Behältnis, wobei hier jedoch durch eine modifizierte Stellung des Umlenkspiegels 7 die Beobachtung nicht in senkrechter Richtung sondern in schräger Richtung entlang des Pfeils P4 erfolgt.

Das Bezugszeichen 12 bezieht sich auf eine Spritzschutzeinrichtung bzw. Spritzwasserfalle, die verhindert, dass in radialer Richtung geschleuderte Flüssigkeiten auf das Sichtfenster gelangen. Diese Spritzwasserfalle weist eine Öffnung 12a auf, durch welche hindurch der Behältnisboden von der Beobachtungseinrichtung 6 beobachtet werden kann.

Genauer steht die Öffnung bzw. der Querschnitt der Öffnung im Wesentlichen senkrecht zu der Trägerplatte 10. Die Spritzschutzeinrichtung 12 weist weiterhin eine Schrägwand 12b auf, die annähernd parallel zu dem Strahlengang (Pfeil P4) verläuft.

Durch die Spritzwasserfalle 12 wird insbesondere auch eine Verschmutzung aus diversen Richtungen oder Nachbarstationen und Spritzwasser aus dem Beschleunigungskarussell 3 verhindert.

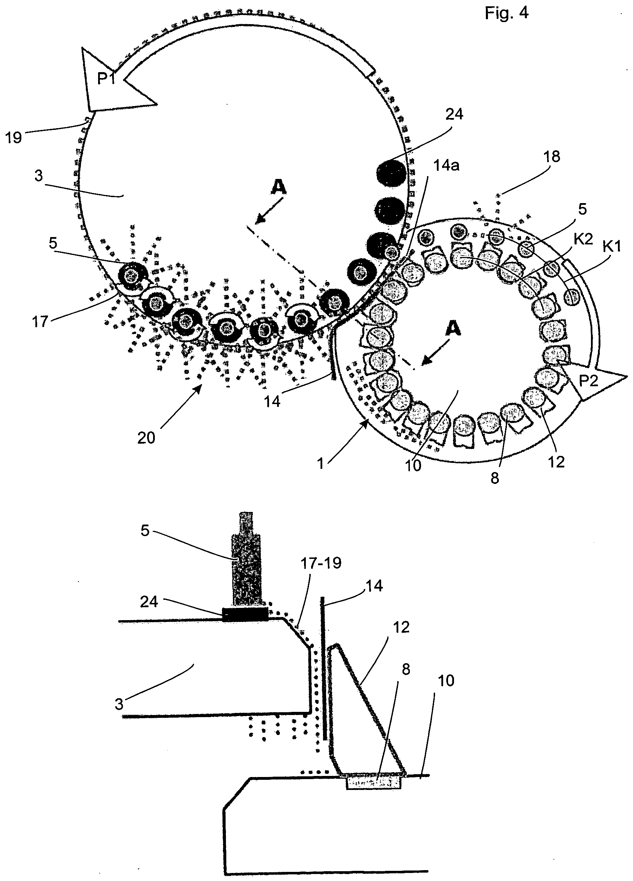

Fig. 4 zeigt eine schematische Draufsicht auf die erfindungsgemäße Anlage. Man erkennt, dass hier die Positionen, an denen die Behältnisse 5 geführt werden, gegenüber den Sichtfenstern 8 in radialer Richtung versetzt ist. Genauer gesagt sind die einzelnen Sichtfenster 8 jeweils innerhalb ihnen zugeordneten Behältnisse 5 angeordnet. Das Bezugszeichen 12 bezieht sich auch hier auf die Spritzwasserfalle, die verhindert, dass beispielsweise die Verschmutzungen 17, 18, 19 direkt auf die Sichtfenster 8 gelangen.

Im unteren Teilbild ist wiederum eine Seitendarstellung der erfindungsgemäßen Inspektionsvorrichtung gezeigt. Man erkennt, dass Verschmutzungen auch hier lediglich auf den Bereich bzw. die Projektion A und nicht auf das Sichtfenster 8 auftreffen. Die Spritzwasserfalle verhindert auch hier eine Verschmutzung durch seitlich benachbarte Behältnisse. Weiterhin wurde, wie im oberen Teilbild gezeigt ist, auch die Spritzschutzwand durch den Abschnitt 14a verlängert, um Verschmutzungen noch weiter zu reduzieren. Zusätzlich zu den genannten Maßnahmen ist es auch möglich, die einzelnen Sichtfenster mit einer speziellen Abblaseinrichtung abzublasen, um auf diese Weise noch verbleibende Schmutzreste zu entfernen.

Insgesamt werden durch die Herausnahme des Sichtfensters aus dem Verschmutzungsbereich Verschmutzungen des Sichtfensters insbesondere durch das Beschleunigungskarussell 3 vermieden. Die Spritzschutzwand 14 verschließt mit ihrem verlängerten Abschnitt 14a sogar die einzelnen Spritzschutzeinrichtungen 12 bzw. deren Öffnungen 12a, während sich das Beschleunigungskarussell 3 und die Inspektionsvorrichtung 1 tangieren. Dieser verlängerte Abschnitt verläuft zwischen den Kreislinien K1 und K2.

Sämtliche in den Anmeldungsunterlagen offenbarten Merkmale werden als erfindungswesentlich beansprucht, sofern sie einzeln oder in Kombination gegenüber dem Stand der Technik neu sind.

## Patentansprüche

1. Vorrichtung (1) zum Inspizieren von Behältnisböden (4) von Behältnissen (5) mit einer Beobachtungseinrichtung (6), welche die Behältnisböden (4) beobachtet, einer Vielzahl von Sichtfenstern (8), welche unterhalb der Behältnisböden (4) angeordnet sind und welche Sichtabschnitte (8a) aufweisen, durch welche hindurch die Beobachtungseinrichtung (6) die Behältnisböden (4) beobachtet, wobei die Sichtfenster (8) in einer Trägerplatte (10) angeordnet sind, **dadurch gekennzeichnet, dass** Halteeinrichtungen vorgesehen sind, die die Behältnisse (5) oberhalb der Trägerplatte (10) und beabstandet zu der Trägerplatte (10) transportieren und die Sichtabschnitte (8a) gegenüber einer Projektion (A) der Behältnisse (5) in einer senkrecht zu der Trägerplatte (10) stehenden Richtung wenigstens teilweise versetzt angeordnet sind.

2. Vorrichtung nach Anspruch 1, **dadurch gekennzeichnet, dass** die Sichtabschnitte (8a) vollständig außerhalb der Projektion (A) der Behältnisse (5) angeordnet sind.

3. Vorrichtung nach wenigstens einem der vorangegangenen Ansprüche, **dadurch gekennzeichnet, dass** die Halteeinrichtung die Behältnisse entlang einer vorgegebenen Linie transportieren und die Sichtfenster versetzt zu dieser Linie angeordnet sind.

4. Vorrichtung nach Anspruch 3, **dadurch gekennzeichnet, dass** die Linie eine erste Kreislinie mit einem vorgegebenen Radius ist und die Sichtfenster in einer radialen Richtung gegenüber dieser Kreislinie versetzt angeordnet sind.

5. Vorrichtung nach Anspruch 1, **dadurch gekennzeichnet, dass** die Trägerplatte einen kreisförmigen Querschnitt aufweist und die Sichtfenster entlang einer zweiten Kreislinie angeordnet sind, wobei diese zweite Kreislinie einen Radius aufweist, der von dem Radius der ersten Kreislinie abweicht.

6. Vorrichtung nach wenigstens einem der vorangegangen Ansprüche, **dadurch gekennzeichnet, dass** wenigstens eine Halteeinrichtung genau einer Beobachtungseinrichtung und genau einem Sichtabschnitt zugeordnet ist.

7. Vorrichtung nach wenigstens einem der vorangegangenen Ansprüche, **dadurch gekennzeichnet, dass** oberhalb der Trägerplatte wenigstens eine Spritzschutzeinrichtung (12) vorgesehen ist, welche die Sichtfenster (8) wenigstens teilweise umgibt.

8. Vorrichtung nach Anspruch 7, **dadurch gekennzeichnet, dass** die Spritzschutzeinrichtung (12) eine Ablassöffnung für Flüssigkeit aufweist.

9. Vorrichtung nach wenigstens einem der vorangegangenen Ansprüche, **dadurch gekennzeichnet, dass** die Sichtabschnitte (8a) radial innerhalb der Behältnisböden (4) angeordnet sind.

10. Vorrichtung nach wenigstens einem der vorangegangenen Ansprüche, **dadurch gekennzeichnet, dass** eine ortsfest angeordnete Spritzschutzwand (14) vorgesehen ist, die wenigstens abschnittsweise radial innerhalb der ersten Kreislinie (K1) verläuft.

11. Anlage (20) zum Inspizieren von Behältnissen mit einer Vorrichtung (1) zum Inspizieren von Behältnisböden nach wenigstens einem der vorangegangenen Ansprüche 1 - 10 und einem stromaufwärts bezüglich der Vorrichtung (1) angeordneten Beschleunigungskarussell (3), welches eine Vielzahl von Halteelementen aufweist, die die Behältnisse in einer vorgegebenen Weise gegenüber dem Beschleunigungskarussell (3) bewegen.

12. Verfahren zum Inspizieren der Behältnisböden (4) von Behältnissen (5), wobei die Behältnisse (5) mit einer Beobachtungseinrichtung (6) von unterhalb durch Sichtabschnitte (8a) hindurch beobachtet werden und die Sichtabschnitte (8a) in Sichtfenstern (8) angeordnet sind, wobei die Sichtfenster (8) in einer Trägerplatte (10) angeordnet sind, **dadurch gekennzeichnet, dass**
die Behältnisböden (4) wenigstens abschnittsweise entlang einer vorgegebenen Linie oberhalb der Trägerplatte (10) und beabstandet zu dieser Trägerplatte (10) transportiert werden und die Sichtabschnitte (8a) gegenüber einer Projektion (A) der Behältnisse (4) in einer senkrecht zu der Trägerplatte (10) stehenden Richtung wenigstens teilweise versetzt angeordnet sind.

## Claims

1. Device (1) for inspecting the bottoms (4) of containers (5), having an observing means (6) which observes the bottoms (4) of containers, a plurality of viewing windows (8) which are arranged below the bottoms (4) of the containers and which have viewing portions (8a) through which the observing means (6) observes the bottoms (4) of the containers, the viewing windows (8) being arranged in a carrier plate (10), **characterised in that** holding means are provided which transport the containers (5) above the carrier plate (10) and with a spacing from the carrier plate (10), and the viewing portions (8a) are arranged to be at least partly offset from a projection (A) of the containers (5) projected in a direction perpendicular to the carrier plate (10).

2. Device according to claim 1, **characterised in that** the viewing portions (8a) are arranged to be entirely outside of the projection (A) of the containers (5).

3. Device according to at least one of the foregoing claims, **characterised in that** the holding means transport the containers along a preset line and the viewing windows are arranged to be offset from this line.

4. Device according to claim 3, **characterised in that** the line is a first circular line of a preset radius and the viewing windows are arranged to be offset from this circular line in a radial direction.

5. Device according to claim 1, **characterised in that** the carrier plate is of circular cross-section and the viewing windows are arranged along a second circular line, the radius of this second circular line being one which differs from the radius of the first circular line.

6. Device according to at least one of the foregoing claims, **characterised in that** at least one holding means has associated with it precisely one observing means and precisely one viewing portion.

7. Device according to at least one of the foregoing claims, **characterised in that** at least one splash-guard means (12) which at least partly surrounds the viewing window (8) is arranged above the carrier plate.

8. Device according to claim 7, **characterised in that** the splash-guard means (12) has a drainage opening for liquid.

9. Device according to at least one of the foregoing claims, **characterised in that** the viewing portions (8a) are arranged radially inside the bottoms (4) of the containers.

10. Device according to at least one of the foregoing claims, **characterised in that** a splash-guard wall (14) is provided which is arranged in a fixed position and which extend at least in sections radially inside of the first circular line (K1).

11. System (20) for inspecting containers, having an device (1) for inspecting the bottoms of containers according to at least one of foregoing claims 1 to 10, and having an accelerating carousel (3) arranged upstream of the device (1), which accelerating carousel (3) has a plurality of holding elements which move the containers in a preset manner relative to the accelerating carousel (3).

12. Method of inspecting the bottoms (4) of containers (5) in which the containers (5) are observed from below by an observing means (6) through viewing portions (8a) and the viewing portions (8a) are arranged in viewing windows (8), the viewing windows (8) being arranged in a carrier plate (10), **characterised in that**, at least in sections, the bottoms (4) of the containers are transported along a preset line above the carrier plate (10) and with a spacing from said carrier plate (10), and the viewing portions (8a) are arranged to be at least partly offset from a projection (A) of the containers (4) projected in a direction perpendicular to the carrier plate (10).

## Revendications

1. Dispositif (1) d'inspection de fonds (4) de récipients (5), comprenant un système d'observation (6), lequel observe les fonds (4) des récipients, une pluralité de fenêtres d'inspection (8), lesquelles sont agencées en-dessous des fonds (4) de récipients et présentent des sections d'inspection (8a), au travers desquelles le système d'observation (6) observe les fonds (4) de récipients, lesdites les fenêtres d'inspection (8) étant agencées dans une plaque de support (10), **caractérisé en ce que**, d'une part, il est prévu des systèmes de retenue qui transportent les récipients (5) au-dessus de la plaque de support (10) et à distance de cette plaque de support (10) et, d'autre part, les sections d'inspection (8a) sont décalées au moins en partie, par rapport une projection (A) des récipients (5), dans une direction perpendiculaire à la plaque de support (10).

2. Dispositif selon la revendication 1, **caractérisé en ce que** les sections d'inspection (8a) sont entièrement agencées à l'extérieur de la projection (A) des récipients (5).

3. Dispositif selon au moins l'une des revendications précédentes, **caractérisé en ce que** les systèmes de retenue transporte les récipients le long d'une ligne prédéfinie et que les fenêtres d'inspection sont décalées par rapport à cette ligne.

4. Dispositif selon la revendication 3, **caractérisé en ce que** la ligne est une première ligne circulaire présentant un rayon prédéfini et que les fenêtres d'inspection sont décalées par rapport à cette ligne circulaire dans une direction radiale.

5. Dispositif selon la revendication 1, **caractérisé en ce que** la plaque de support comprend une section transversale circulaire et que les fenêtres d'inspection sont agencées le long d'une deuxième ligne circulaire, cette deuxième ligne circulaire présentant un rayon qui est différent du rayon de la première ligne circulaire.

6. Dispositif selon au moins l'une des revendications précédentes, **caractérisé en ce qu'**au moins un système de retenue est associé à un seul système d'observation et à une seule section d'inspection.

7. Dispositif selon au moins l'une des revendications précédentes, **caractérisé en ce qu'**il est prévu, au dessus de la plaque support, un système de protection contre les projections (12), qui entoure au moins en partie les fenêtres d'inspection (8).

8. Dispositif selon la revendication 7, **caractérisé en ce que** le système de protection contre les projections (12) comprend un orifice d'évacuation pour du liquide.

9. Dispositif selon au moins l'une des revendications précédentes, **caractérisé en ce que** les sections d'inspection (8a) sont agencées radialement à l'intérieur des fonds (4) de récipients.

10. Dispositif selon au moins l'une des revendications précédentes, **caractérisé en ce qu'**il est prévu de monter fixement une paroi de protection contre les projections (14), qui s'étend au moins en partie radialement à l'intérieur de la première ligne circulaire (K1).

11. Installation (20) d'inspection de récipients comprenant un dispositif (1) d'inspection de fonds de récipients selon au moins l'une des revendications précédentes 1 à 10 et un carrousel d'accélération (3) qui est agencé en amont du dispositif (1) et qui comprend une pluralité d'éléments de retenue, qui déplacent les récipients d'une manière prédéfinie par rapport au carrousel d'accélération (3).

12. Procédé d'inspection des fonds (4) de récipients (5), dans lequel les récipients (5) sont observés par le bas au travers de sections d'inspection (8a) d'un dispositif d'observation (6), les sections d'inspection (8a) étant agencées dans des fenêtres d'inspection (8), elles-mêmes agencées dans une plaque de support (10), **caractérisé en ce que**
les fonds (4) de récipients sont transportés au moins en partie le long d'une ligne prédéfinie au-dessus de la plaque de support (10) et à distance de cette plaque de support (10) et que les sections d'inspection (8a) sont au moins en partie décalées, par rapport à une projection (A) des récipients (4), dans une direction perpendiculaire à la plaque de support (10).
